# EUROPÄISCHE PATENTSCHRIFT

(11) **EP 2 188 416 B1**
(45) Veröffentlichungstag und Bekanntmachung des Hinweises auf die Patenterteilung: **12.09.2012**
(21) Anmeldenummer: 08804444.1
(22) Anmeldetag: 19.09.2008
(51) Int. Cl.: C23C 30/00, C23C 24/04, C23C 10/30, B23P 6/00

(54) **VERFAHREN ZUR REPARATUR EINES BAUTEILS DURCH BESCHICHTEN**
METHOD FOR REPAIRING A COMPONENT BY COATING
PROCÉDÉ DE RÉPARATION D'UNE PIÈCE PAR REVÊTEMENT

(30) Priorität: 21.09.2007 DE 102007046386
(43) Veröffentlichungstag der Anmeldung: 26.05.2010
(73) Patentinhaber: Siemens Aktiengesellschaft, 80333 München (DE)
(72) Erfinder: JENSEN, Jens Dahl, 14050 Berlin (DE); KLINGEMANN, Jens, 12524 Berlin (DE); KRÜGER, Ursus, 14089 Berlin (DE); KÖRTVELYESSY, Daniel, 13469 Berlin (DE); LÜTHEN, Volkmar, 14163 Berlin (DE); REICHE, Ralph, 13465 Berlin (DE); STIER, Oliver, 12163 Berlin (DE)
(74) Vertreter: Wolff, Harry
(86) Internationale Anmeldenummer: PCT/EP2008/062510
(87) Internationale Veröffentlichungsnummer: WO 2009/040306

(56) Entgegenhaltungen:
- EP-A- 1 685 923
- EP-A- 1 707 650
- WO-A-2005/093128
- DE-A1- 1 952 370
- DE-A1- 2 600 237
- US-A- 5 674 610
- US-A1- 2006 222 776

## Beschreibung

Die Erfindung betrifft ein Verfahren zur Reparatur eines Bauteils, dessen oberflächennaher Bereich Beschädigungen aufweist, bei dem ein Beschichtungsmaterial in Form von Partikeln insbesondere durch Kaltgasspritzen auf das Bauteil aufgetragen wird und das Bauteil anschließend erwärmt wird.

Ein Verfahren dieser Art ist beispielsweise aus der US 2006/0045785 A1 bekannt. Bei diesem Verfahren wird ein Kaltgasspritzen angewendet, um verschlissene Bereiche einer Turbinenschaufel durch einen erneuten Materialauftrag zu reparieren. Zu diesem Zweck wird auf die Schaufel aus einer Titanlegierung entweder Material derselben Titanlegierung oder einer verwandten Titanlegierung aufgebracht und im Rahmen einer Nachbearbeitung eine Wärmebehandlung durchgeführt und die Endkontur z. B. mittels Schleifen erzeugt. Ein ähnliches Verfahren, insbesondere zur Reparatur von Rissen in der Oberfläche von Turbinenschaufeln, ist in der US 2002/0066770 A1 beschrieben.

Gemäß der US 5,674,610 und der US 2006/0222776 A1 ist es bekannt, dass Turbinenschaufeln auch durch Auftrag von Schichten repariert werden können, die einen überproportionalen Anteil bestimmter Gefügeanteile aufweisen. Mit überproportional ist gemeint, dass der Anteil an diesen Gefügeanteilen größer ist, als an sich für die Bauteilzusammensetzung gefordert. Hierbei handelt es sich um Gefügeanteile, die in dem zu reparierenden Bauteil aufgrund des Betriebs dieses Bauteils in ihrer Konzentration verringert wurden. Bei Turbinenschaufeln kann es sich hierbei beispielsweise um die Elemente Aluminium oder Chrom handeln.

Die Schichten zur Reparatur können beispielsweise mittels Kaltgasspritzen aufgebracht werden.

Gemäß der EP 1 927 672 A2 ist es bekannt, dass Schichten auf Bauteilen wie Turbinenschaufeln auch mit ummantelten Nanopartikeln versehen werden können, wobei diese Nanopartikel dispers in der Schicht verteilt sind. Die Ummantelung der Partikel verlangsamt eine Diffusion des im Kern der Partikel befindlichen Materials. Hierbei kann es sich bevorzugt um ein Material handeln, welches während der Betriebsdauer der Turbinenschaufeln in seiner Konzentration im Gefüge der Schicht verringert wird, so dass eine Diffusion dieses Materials aus dem Inneren der Partikel heraus zu einem Konzentrationsausgleich führt.

Die Aufgabe der Erfindung liegt darin, ein Verfahren zur Reparatur eines Bauteils mittels Kaltgasspritzen anzugeben, mit dem sich die Bauteileigenschaften des zu reparierenden Bauteils möglichst weitgehend wieder herstellen lassen.

Diese Aufgabe wird erfingdungsgemäß Verfahren gemäß Anspruch 1 dadurch gelöst, dass bei einem Bauteil, welches eine Beschädigung des oberflächennahen Bereiches dahingehend beinhaltet, dass zumindest ein bestimmter Gefügeanteil die geforderte Konzentration unterschreitet, repariert wird, indem das Reparaturmaterial eine Konzentration an diesem bestimmten Gefügeanteil aufweist, die die geforderte Konzentration überschreitet. Das Verfahren findet also bei Bauteilen wie Turbinenschaufeln Einsatz, die das Ende ihrer Lebensdauer erreicht haben und neben sichtbaren Abnutzungserscheinungen wie abrasivem Verschleiß oder Rissbildung auch zunächst nicht sichtbare Verschleißerscheinungen wie eine Degradation der oberflächennahen Gefügebereiche aufweisen. Während des Betriebes ändert sich nämlich die Gefügezusammensetzung insbesondere thermisch stark beanspruchter Bauteile dadurch, dass bestimmte Gefügeanteile zum Schutz des Bauteils Oxide auf der Oberfläche des Bauteils bilden. Diese Oxide müssen wegen eines ständigen Abbaus an der Oberfläche nachgebildet werden, wofür das Bauteil diffusionsgesteuert Material zur Oxidation nachliefert. Der Gefügeanteil dieses Materials nimmt infolge dieser Vorgänge mit fortschreitender Benutzung des Bauteils ab, bis ein Grenzwert erreicht wird, der den Austausch des Bauteils erforderlich macht.

An dieser Stelle setzt die Erfindung an, wobei das Bauteil für eine Wiederverwendung besser konditioniert wird als nach dem Stand der Technik, indem nach der Reparatur nicht nur das aufgebrachte Material die geforderte Materialzusammensetzung des Bauteils aufweist, sondern das Beschichtungsmaterial gezielt einen höhere Konzentration als für das Bauteil gefordert an diesem bestimmten Gefügeanteil aufweist. Bei der anschließenden Erwärmung des Bauteils, welche durch eine gezielte Wärmebehandlung oder auch durch den Einsatz des Bauteils unter thermischer Beanspruchung folgen, werden diffusionsbedingt die unterschiedlichen Konzentrationen des bestimmten Gefügeanteils in der Reparaturbeschichtung sowie dem darunter liegenden Bauteil angeglichen, so dass vorteilhaft das gesamte Bauteil zumindest näherungsweise wieder die geforderte Konzentration an dem bestimmten Gefügeanteil aufweist. Hierdurch können die Eigenschaften des Bauteils in annähernd mit dem Neuteil vergleichbarer Weise wieder hergestellt werden, so dass auch das Instand gesetzte Bauteil eine mit dem Neubauteil vergleichbare Lebensdauer erwarten lässt.

Gemäß der Erfindung ist vorgesehen, dass der bestimmte Gefügeanteil in Partikeln vorhanden ist, die mit einer Ummantelung versehen sind. Dies hat den wesentlichen Vorteil, dass auch Gefügeanteile verarbeitet werden können, die für ein Aufbringen mittels Kaltgasspritzen (wenn dieses Beschichtungsverfahren gewählt wird) zu empfindlich wären. Hierbei ist zu berücksichtigen, dass das Beschichten mit einer beträchtlichen mechanischen Belastung und einer Erwärmung des Schichtmaterials einhergeht, so dass bei empfindlichen Schichtmaterialien eine vorzeitige Degradation zu befürchten ist, die den anschließenden Effekt eines Konzentrationsausgleiches an dem bestimmten Gefügeanteil in dem reparierten Bauteil vermindert oder verhindert. Zu erwähnen sind insbesondere stark oxidationsgefährdete Metalle, die ohne die Maßnahme einer Ummantelung lediglich in Schutzgasatmosphäre verarbeitet werden könnten, was die Anwendung des Kaltgasspritzens enorm verteuern würde.

Es ist zwar aus der EP 1707650 A1 bekannt, Schichten von z. B. Turbinenschaufeln mit Nanopartikeln zu versehen, die ein Depot an bestimmten Legierungsanteilen der Schicht bilden. Jedoch werden diese Partikel in der gesamten Schicht des Neuteils verwendet, um die Lebensdauer desselben zu verlängern. Demgegenüber werden die Partikel in dem erfindungsgemäßen Verfahren für eine Reparatur von Schichten verwendet dahingehend verwendet, dass deren Material bei der Wärmebehandlung in "abgenutzte". Schichten diffundiert und deren Integrität für eine Weiterverwendung des beschichteten Bauteils wieder herstellt.

Bei dem erfindungsgemäßen Verfahren können gleichartige Partikel oder auch Mischungen von Partikeln unterschiedlicher Zusammensetzungen verarbeitet werden. Durch Mischung der Partikel lässt sich vorteilhaft mit einem begrenzten Vorrat unterschiedlicher Arten von Partikeln eine weite Bandbreite unterschiedlicher Zusammensetzungen der Reparaturbeschichtung einstellen. ummantelte Partikel, deren Herstellung mit einem größeren Aufwand verbunden ist, können mit nicht ummantelten Partikeln vermischt werden, wobei die nicht ummantelten Partikel dasjenige Schichtmaterial enthalten, welches unproblematisch mittels Kaltgasspritzen verarbeitet werden kann.

Gemäß einer besonderen Ausgestaltung des Verfahrens ist vorgesehen, dass in den Partikeln mit der Ummantelung ausschließlich Gefügeanteile enthalten sind, die die geforderte Konzentration in dem zu reparierenden Bauteil unterschreiten. Hierbei handelt es sich um die Gefügeanteile in dem zu reparierenden Bauteil, die aufgrund der Unterschreitung der Konzentration mittels des oben beschriebenen Konzentrationsausgleiches aufgefüllt werden müssen. Werden diese Gefügeanteile in den ummantelten Partikeln in hoher Konzentration zur Verfügung gestellt, lässt sich vorteilhaft auf einfache Weise durch Zumischen der ummantelten Partikel zu den die Zusammensetzung der aufzutragenden Schicht bestimmenden Partikeln die Konzentration des bestimmten Gefügeanteils stufenlos einstellen. Nach einer Analyse des zu reparierenden Bauteils kann unter Berücksichtigung des Vorganges des Konzentrationsausgleiches die am besten geeignete Partikelmischung erzeugt werden. Ummantelte Nanopartikel, die für die vorliegende Erfindung potentiell geeignet sind, sind in der EP 1 707 650 A1 angegeben, wobei die ummantelten Nanopartikel gemäß diesem Dokument als Materialdepots verwendet werden, welche das Material aufgrund eines Intaktbleibens der Umhüllung nur langsam abgeben.

Die bestimmten Gefügeanteile können beispielsweise Aluminium oder Aluminium und Chrom als Legierung sein. Diese Gefügeanteile werden bei Turbinenschaufeln, die eine sogenannten MCrAIY-Schicht aufweisen oder vollständig aus dieser Legierung hergestellt sind, verwendet. Bei dieser Legierung sind es nämlich gerade die Gefügeanteile Chrom und Aluminium, deren Konzentration während des Betriebs der Turbinenschaufel abnimmt.

Als Ummantelung sind vorteilhaft Metalloxide, insbesondere Aluminiumoxid, Yttriumoxid, Zirkonoxid oder Chromoxid, geeignet. Diese Oxide bilden vorteilhaft sehr temperaturstabile Umhüllungen um die zu verarbeitenden Partikel aus. Diese Umhüllungen können bereits während des Ausbildens der Reparaturschicht durch das Auftreffen der Partikel auf das Bauteil und den damit verbundenen mechanischen Belastungen zerstört werden, so dass einem diffusionsbedingten Konzentrationsausgleich zwischen Reparaturschicht und Bauteil kein Widerstand entgegengesetzt wird.

Vorteilhaft kann die Ummantelung aber auch aus einem Metall, insbesondere Kobalt, Nickel oder Chrom oder einer Metalllegierung dieser Metalle bestehen. Diese Metalle bieten ebenfalls einen ausreichenden Schutz während der Verarbeitung der Partikel, da sie insbesondere gegenüber einer Oxidation relativ stabil sind. Eine Ummantelung aus Metall hat den Vorteil, dass die Materialien der Ummantelung nach deren Zerstörung einen Legierungsanteil bilden können, ohne dass Sauerstoff im Gefüge verbleiben muss.

Besonders vorteilhaft ist es, wenn die den bestimmten Gefügeanteil enthaltenen Partikel Nanopartikel sind. Dies hat den Vorteil, dass die Verteilung der Gefügephase, welche diffusionsbedingt an dem Konzentrationsausgleich beteiligt werden soll, sehr fein in der Reparaturschicht verteilt ist und so die zurückzulegenden Wege für die diffundierenden Elemente geringer ausfallen. Die Nanopartikel müssen, um eine Verarbeitbarkeit mittels Kaltgasspritzen zu gewährleisten, beispielsweise auf der Oberfläche der anderen Beschichtungspartikel angelagert werden. Dies kann beispielsweise durch eine Vorbehandlung des zu verarbeitenden Pulvers durch Mahlen erreicht werden. Eine andere Möglichkeit liegt darin, die Nanopartikel zu agglomerieren, so dass diese als Agglomerate verarbeitet werden können. Der Verband der Agglomerate löst sich dann beim Auftreffen auf das zu beschichtende Bauteil, wodurch die feine Verteilung zwischen den anderen Beschichtungspartikeln gewährleistet bleibt. Auch ist es möglich, dass die anderen Partikel, die nicht den bestimmten Gefügeanteil enthalten, als Nanopartikel ausgeführt sind. In diesem Fall müssen diese mit den Nanopartikeln, die den bestimmten Gefügeanteil enthalten, agglomeriert werden, wobei in den Agglomeraten Partikelgemische entstehen.

Besonders vorteilhaft ist es, wenn die Erwärmung des Bauteils auf eine Temperatur erfolgt, die oberhalb des Schmelzpunktes der bestimmten Gefügeanteile liegt. Hierdurch kann erreicht werden, dass der Vorgang des diffusionsgesteuerten Konzentrationsausgleiches beschleunigt wird, da sich in dem umgebenden Gefüge der Reparaturbeschichtung eine flüssige Phase desjenigen Gefügeanteils ausbildet, welcher den Konzentrationsausgleich bewirken soll. Hierdurch wird der Austausch der flüssigen Phase an den Phasengrenzen zum umgebenden Gefüge stark beschleunigt. Außerdem ist mit der Verflüssigung des Gefügeanteils eine starke Ausdehnung verbunden, die durch das umgebende Gefüge aufgefangen wird, wobei insbesondere eine Ummantelung aus einem Metalloxid aufgrund des geringeren Wärmeausdehnungskoeffizienten zerstört wird, soweit dies nicht bereits beim Auftreffen der betreffenden Partikel erfolgt ist. Auch hierdurch lässt sich vorteilhaft der Vorgang des Konzentrationsausgleiches beschleunigen, da die Diffusionsbarriere der Umhüllung bzw. deren Reste zerstört werden.

Vorteilhaft ist es auch, wenn die Erwärmung des Bauteils auf eine Temperatur erfolgt, die unterhalb der Rekristallisationstemperatur des Gefüges des oberflächennahen Bereiches des zu reparierenden Bauteils liegt. Hierdurch kann erreicht werden, dass die grundsätzliche Gefügestruktur, insbesondere die Korngröße des oberflächennahen Gefügebereiches nicht beeinflusst wird. Die Temperaturerhöhung beschleunigt lediglich Diffusionsvorgänge, die den gewünschten Konzentrationsausgleich erbringen.

Allerdings kann eine Erwärmung des Bauteils oberhalb der Rekristallisationstemperatur bei bestimmten Bauteilen auch gewünscht sein, um z. B. Spannungen in dem Gefüge abzubauen, wobei der Vorgang des Konzentrationsausgleiches vorteilhaft hierdurch noch beschleunigt wird.

Anzumerken ist weiterhin, dass auch bei einem nicht vollständigen Abschluss des Konzentrationsausgleiches durch die Wärmebehandlung bei thermisch stark belasteten Bauteilen ein fortschreitender Konzentrationsausgleich bei Wiederinbetriebnahme des Bauteils erfolgen kann, da die Betriebstemperaturen hoch genug sind, dass ein Diffusionsvorgang stattfinden kann (dieser hat schließlich auch zu einem Verlust des bestimmten Gefügeanteils während des Betriebes geführt).

Es ist auch vorteilhaft, wenn die Erwärmung des Bauteils auf eine Temperatur erfolgt, die oberhalb der Betriebstemperaturen des Gefüges des oberflächennahen Bereiches liegt. In diesem Temperaturbereich ist eine Diffusionsmöglichkeit für die bestimmten Gefügeanteile aus der Reparaturschicht in die oberflächennahen Bereiche des Bauteils auf jeden Fall möglich. Oberhalb der Betriebstemperaturen wird dieser Vorgang vorteilhaft noch beschleunigt, was die Wärmebehandlungszeiten einer Nachbehandlung vorteilhaft abkürzt. Die Wärmebehandlung kann normalerweise auf einem höheren Temperaturniveau gefahren werden, als dies beim Betrieb des Bauteils möglich ist, weil dieser Vorgang nur für einen begrenzten Zeitraum auf das Bauteil wirkt und zudem besser überwacht werden kann, so dass ein Sicherheitsabstand zu Temperaturen, bei denen die Integrität des Bauteilgefüges gefährdet ist, kleiner gewählt werden kann, als beim Betrieb desselben Bauteils.

Weitere Einzelheiten der Erfindung werden nachfolgend anhand der Zeichnung beschrieben. Gleiche oder sich entsprechende Zeichnungselemente sind in den einzelnen Figuren mit jeweils den gleichen Bezugszeichen versehen und werden nur insoweit näher erläutert, wie sich Unterschiede zwischen den einzelnen Figuren ergeben.

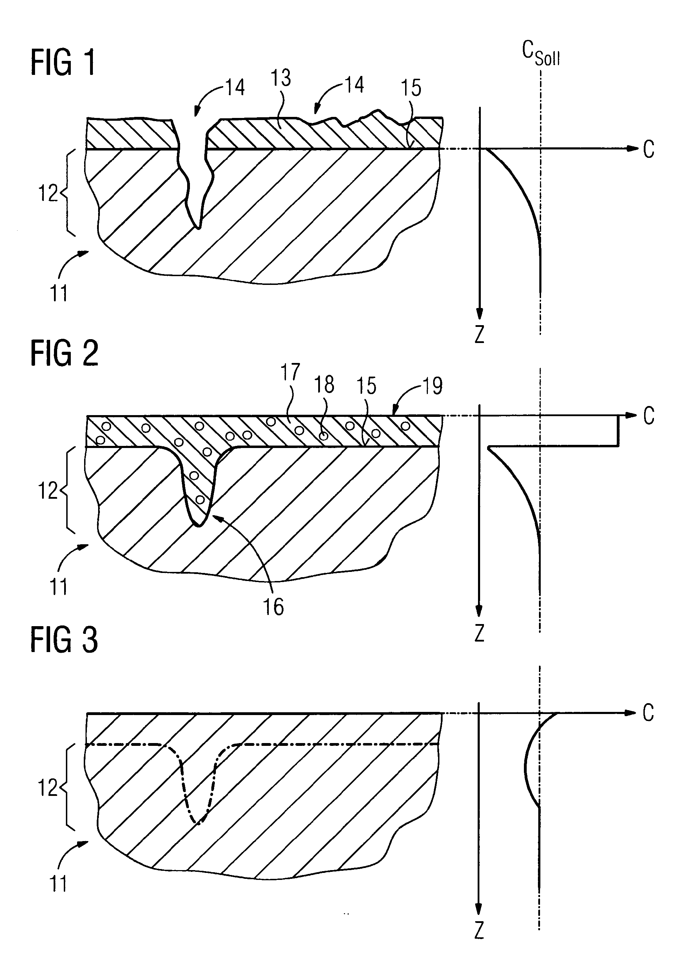

Es zeigen die
Figuren 1 bis 3 unterschiedliche Stadien eines Bauteils, welches nach einem Ausführungsbeispiel des erfindungsgemäßen Verfahrens behandelt wird, wobei jeweils nur ein Ausschnitt des Bauteils als Schnitt dargestellt ist.

Bei einem Bauteil 11 gemäß Figur 1 handelt es sich um eine Turbinenschaufel, welche durch eine MCrAIY-Legierung gebildet ist. Dargestellt ist ein oberflächennaher Bereich 12 der Turbinenschaufel, welche eine Beschichtung 13 aufweist. Diese kann beispielsweise aus einem Termal Barriere Coating (TBC) bestehen, wobei diese Schicht einem Temperaturschutz der Turbinenschaufel dient. Der oberflächennahe Bereich 12 des Bauteils 11 kann selbst eine Schicht auf einem nicht näher dargestellten Grundkörper darstellen, wobei es auch möglich ist, die Schaufel massiv aus der MCrAIY-Legierung zu fertigen.

In Figur 1 sind weiterhin Beschädigungen 14 dargestellt, die beispielsweise aus einem abrasiven Verschleiß an der Oberfläche oder einem Riss bestehen können. Außerdem ist in einer maßstabsgerecht zur Darstellung des Bauteils 11 passenden Graphik die Konzentration eines bestimmten Gefügeanteils C über einer den Abstand zur Oberfläche 15 des unbeschichteten Bauteils 11 angebenden Wegkoordinate z dargestellt. Der bestimmte Gefügeanteil kann beispielsweise der Gehalt an Aluminium in der MCrAIY-Legierung sein.

Zu erkennen ist eine Konzentration Cₛₒₗₗ an Aluminium in der Schicht, die in allen Figuren als strichpunktierte Linie eingezeichnet ist. Diese Konzentration weist näherungsweise ein Neuteil auf, bevor es in Betrieb genommen wird. Das zu reparierende Bauteil 11 gemäß Figur 1 weist jedoch die eingezeichnete Konzentration auf, wobei deutlich wird, dass in tieferen Bereichen des Bauteils 11 die Sollkonzentration Cₛₒₗₗ noch erreicht wird. Im oberflächennahen Bereich 12 nimmt die Konzentration jedoch ab, wobei diese an der Oberfläche 15 sehr gering ist.

Gemäß Figur 2 ist ein Stadium des Reparaturverfahrens dargestellt, dem eine Reinigung des Bauteils 11 unter einem Abtrag der Beschichtung 13 vorausgegangen ist. Bei diesem Abtrag wurden auch die Wände des Risses 14 gemäß Figur 1 geglättet, so dass sich eine Furche 16 in der Oberfläche 15 gebildet hat. Diese ist in einem nachfolgenden Beschichtungsschritt mit einem Beschichtungsmaterial 17 zur Reparatur des Bauteils 11 vollständig ausgefüllt worden. In dem Beschichtungsmaterial 17 sind ummantelte Nanopartikel 18 enthalten, wobei das Material der Nanopartikel aus Aluminium besteht und als Metalloxid Aluminiumoxid (Al₂O₃) gewählt wurde. Die Parameter des Kaltgasspritzens sind so eingestellt, dass die Hülle (nicht näher dargestellt) der Nanopartikel weitgehend erhalten blieb.

Der neben dem Bauteil 11 gemäß Figur 2 dargestellte Konzentrationsverlauf C zeigt, dass sich im Bereich des Bauteils 11 hinsichtlich der Konzentrationsverteilung im Vergleich zum Ausgangszustand gemäß Figur 1 nichts verändert hat. Jedoch ist die Konzentration an Aluminium in der Reparaturschicht 19 bedeutend höher, wobei angemerkt sei, dass hierbei die durchschnittliche Konzentration an Aluminium unter Berücksichtigung des Aluminiumgehaltes sowohl in der Reparaturschicht 19 als auch in den Nanopartikeln 18 zugrunde gelegt wurde.

In Figur 3 ist das Bauteil 11 nach erfolgter Wärmebehandlung dargestellt. Die Wärmebehandlung kann bei Temperaturen oberhalb des Schmelzpunktes von Aluminium (ca. 660° C) erfolgen. Wegen der Abmessungen der Nanopartikel fällt der Schmelzpunkt des Aluminiums sogar etwas geringer aus, was sich vorteilhaft auf die für das Aufschmelzen der Nanopartikel notwendige Temperaturen auswirkt. Während des Kaltgasspritzens wurden die Partikel bis höchstens 200° C erwärmt, wobei beim Kaltgasspritzen Temperaturen des Trägergases bis zu 850° C möglich waren, ohne dass eine größere Erwärmung der Partikel verzeichnet werden konnte.

Unter den bei der Wärmebehandlung auftretenden Temperaturen lösen sich die Umhüllungen der Nanopartikel auf und es kommt zu einem Konzentrationsausgleich an Aluminium im reparierten Bauteil, welcher der nebenstehenden Graphik zu entnehmen ist. Es zeigt sich, dass die Konzentration C an Aluminium in der ehemaligen Reparaturschicht, die nun lediglich durch eine strichpunktierte Linie in Figur 3 noch angedeutet ist, weitgehend abgebaut hat und in einem engen Bereich um die Sollkonzentration Cₛₒₗₗ eingestellt ist. Gleichzeitig hat sich diffusionsgesteuert die Konzentration an Aluminium in dem oberflächennahen Bereich 12 des Bauteils erhöht, so dass dort die Sollkonzentration Cₛₒₗₗ fast erreicht wird. Das reparierte Bauteil weist damit vorteilhaft ein Eigenschaftsprofil auf, welches fast an dasjenige des Neuteils heranreicht. Zur Fertigstellung des Bauteils (11) kann dieses noch mit einem TBC versehen werden (nicht dargestellt).

## Patentansprüche

1. Verfahren zur Reparatur eines Bauteils (11), dessen oberflächennaher Bereich (12) Beschädigungen (14) aufweist, bei dem ein Beschichtungsmaterial (17) in Form von Partikeln auf das Bauteil durch Kaltgasspritzen aufgetragen wird, und das Bauteil anschließend erwärmt wird, wobei die Beschädigung (14) des oberflächennahen Bereiches eine Degradation des Gefüges dahingehend beinhaltet, dass zumindest ein bestimmter Gefügeanteil die geforderte Konzentration unterschreitet und dass das Reparaturmaterial eine Konzentration an diesem bestimmten Gefügeanteil aufweist, die die geforderte Konzentration überschreitet,
**dadurch gekennzeichnet, dass**
das Beschichtungsmaterial ummantelte und nicht ummantelte Partikel aufweist, wobei der bestimmte Gefügeanteil sowohl in den ummantelten als auch in nicht ummantelten Partikeln vorhanden ist.

2. Verfahren nach Anspruch 1,
**dadurch gekennzeichnet, dass**
in den Partikeln mit der Ummantelung ausschließlich Gefügeanteile enthalten sind, für die die geforderte Konzentration in dem zu reparierenden Bauteil (11) unterschritten ist.

3. Verfahren nach einem der voranstehenden Ansprüche,
**dadurch gekennzeichnet, dass**
die bestimmten Gefügeanteile Aluminium oder Aluminium und Chrom sind.

4. Verfahren nach einem der voranstehenden Ansprüche,
**dadurch gekennzeichnet, dass**
die Ummantelung aus einem Metalloxid, insbesondere Aluminiumoxid, Yttriumoxid, Zirkonoxid oder Chromoxid besteht.

5. Verfahren nach einem der voranstehenden Ansprüche,
**dadurch gekennzeichnet, dass**
die Ummantelung aus einem Metall, insbesondere Kobalt, Nickel oder Chrom, oder einer Metalllegierung dieser Metalle besteht.

6. Verfahren nach einem der voranstehenden Ansprüche,
**dadurch gekennzeichnet, dass**
zumindest die den bestimmten Gefügeanteil enthaltenden Partikel Nanopartikel sind.

7. Verfahren nach einem der voranstehenden Ansprüche,
**dadurch gekennzeichnet, dass**
die Erwärmung des Bauteils auf eine Temperatur erfolgt, die oberhalb des Schmelzpunktes der bestimmten Gefügeanteile liegt.

8. Verfahren nach einem der voranstehenden Ansprüche,
**dadurch gekennzeichnet, dass**
die Erwärmung des Bauteils (11) auf eine Temperatur erfolgt, die unterhalb der Rekristallisationstemperatur des Gefüges des oberflächennahen Bereiches (12) liegt.

9. Verfahren nach einem der voranstehenden Ansprüche,
**dadurch gekennzeichnet, dass**
die Erwärmung des Bauteils (11) auf eine Temperatur erfolgt, die oberhalb der Betriebstemperaturen des Gefüges des oberflächennahen Bereiches liegt.

10. Verfahren nach einem der voranstehenden Ansprüche,
**dadurch gekennzeichnet, dass**
als Bauteil ein Turbinenbauteil, insbesondere eine Turbinen - oder Verdichterschaufel repariert wird.

## Claims

1. Process for repairing a component (11), the region (12) of which near the surface has damaged locations (14), in which process a coating material (17) is applied to the component by cold spraying in the form of particles, and the component is then heated, the damaged location (14) of the region near the surface containing a degradation of the microstructure to the effect that at least a specific microstructural proportion falls below the required concentration, and that the repair material has a concentration of this specific microstructural proportion which exceeds the required concentration,
**characterized in that**
the coating material has encased and non-encased particles, the specific microstructural proportion being present both in the encased particles and in the non-encased particles.

2. Process according to Claim 1,
**characterized in that**
the particles with the casing exclusively contain microstructural proportions for which the required concentration is undershot in the component (11) to be repaired.

3. Process according to one of the preceding claims, **characterized in that**
the specific microstructural proportions are aluminum or aluminum and chromium.

4. Process according to one of the preceding claims,
**characterized in that**
the casing consists of a metal oxide, in particular aluminum oxide, yttrium oxide, zirconium oxide or chromium oxide.

5. Process according to one of the preceding claims,
**characterized in that**
the casing consists of a metal, in particular cobalt, nickel or chromium, or a metal alloy of these metals.

6. Process according to one of the preceding claims,
**characterized in that**
at least the particles which contain the specific microstructural proportion are nanoparticles.

7. Process according to one of the preceding claims,
**characterized in that**
the component is heated to a temperature above the melting point of the specific microstructural proportions.

8. Process according to one of the preceding claims,
**characterized in that**
the component (11) is heated to a temperature below the recrystallization temperature of the microstructure of the region (12) near the surface.

9. Process according to one of the preceding claims,
**characterized in that**
the component (11) is heated to a temperature above the operating temperatures of the microstructure of the region near the surface.

10. Process according to one of the preceding claims,
**characterized in that**
the component repaired is a turbine component, in particular a turbine blade or a compressor blade.

## Revendications

1. Procédé de réparation d'un élément ( 11 ) dont la région ( 12 ) proche de la surface a des endommagements ( 14 ), dans lequel on dépose par projection par gaz froid un matériau ( 17 ) de revêtement sous la forme de particules sur l'élément et on échauffe ensuite l'élément, l'endommagement ( 14 ) de la région proche de la surface comportant une dégradation de la structure, en ce qu'au moins une proportion déterminée de la structure a une concentration inférieure à la concentration exigée et en ce que le matériau de réparation a sur cette proportion déterminée de la structure une concentration qui dépasse la concentration exigée,
**caractérisé en ce que** le matériau de revêtement comporte des particules enrobées et non enrobées, la proportion déterminée de la structure étant présente à la fois dans les particules enrobées et dans les particules non enrobées.

2. Procédé suivant la revendication 1,
**caractérisé en ce que**
dans les particules ayant l'enrobage sont contenues exclusivement des proportions de structure pour lesquelles la concentration est inférieure à la concentration exigée dans l'élément ( 11 ) à réparer.

3. Procédé suivant l'une des revendications précédentes, **caractérisé en ce que** les proportions déterminées de structure sont de l'aluminium ou de l'aluminium et du chrome.

4. Procédé suivant l'une des revendications précédentes, **caractérisé en ce que** l'enrobage est en un oxyde métallique, notamment un oxyde d'aluminium, un oxyde d'yttrium, un oxyde de zirconium ou un oxyde de chrome.

5. Procédé suivant l'une des revendications précédentes, **caractérisé en ce que** l'enrobage est en un métal, notamment en cobalt, en nickel ou en chrome ou en un alliage de ces métaux.

6. Procédé suivant l'une des revendications précédentes, **caractérisé en ce qu'**au moins les particules contenues dans la proportion déterminée de structure sont des nanoparticules.

7. Procédé suivant l'une des revendications précédentes, **caractérisé en ce que** l'on effectue l'échauffement de l'élément jusqu'à une température qui est supérieure au point de fusion des proportions déterminées de la structure.

8. Procédé suivant l'une des revendications précédentes, **caractérisé en ce que** l'on effectue l'échauffement des éléments ( 11 ) jusqu'à une température qui est inférieure au point de recristallisation de la structure de la région ( 12 ) proche de la surface.

9. Procédé suivant l'une des revendications précédentes, **caractérisé en ce que** l'on effectue l'échauffement de l'élément ( 11 ) jusqu'à une température qui est supérieure aux températures en fonctionnement de la structure de la région proche de la surface.

10. Procédé suivant l'une des revendications précédentes, **caractérisé en ce que** l'on répare comme élément, un élément de turbine, notamment une aube de turbine ou une aube de compresseur.
